# EUROPEAN PATENT SPECIFICATION

(11) **EP 1 827 875 B1**
(45) Date of publication and mention of the grant of the patent: **03.06.2009**
(21) Application number: 04804117.2
(22) Date of filing: 21.12.2004
(51) Int. Cl.: B60C 9/18, B60C 1/00

(54) **HEAVY LOAD VEHICLE TIRE**
FAHRZEUGREIFEN FÜR SCHWERLASTEN
PNEUMATIQUE POUR VEHICULE A CHARGE LOURDE

(43) Date of publication of application: 05.09.2007
(73) Proprietor: Pirelli Tyre S.p.A., 20126 Milano (IT)
(72) Inventor: MONTANARO, Fabio, I-20126 Milano (IT); MARTIN, Mario, I-20126 Milano (IT); LO PRESTI, Gaetano, I-20126 Milano (IT)
(74) Representative: Giannesi, Pier Giovanni
(86) International application number: PCT/EP2004/014519
(87) International publication number: WO 2006/066602

(56) References cited:
- EP-A- 0 280 442
- US-A- 4 373 566
- PATENT ABSTRACTS OF JAPAN vol. 2003, no. 12, 5 December 2003 (2003-12-05) & JP 2003 312210 A (SUMITOMO RUBBER IND LTD), 6 November 2003 (2003-11-06)

## Description

The present invention relates to a heavy load vehicle tire.

More in particular the present invention relates to a tire for heavy transportation vehicles such as, for example, trucks, buses, comprising a belt structure and at least two inserts made of crosslinked elastomeric material positioned in proximity of the axially external edges of said belt structure.

As it is known, a tire usually comprises a carcass structure of a substantially toroidal shape, having opposite lateral edges associated with respective right-hand and left-hand bead structures; a belt structure applied in a radially external position with respect to said carcass structure; a tread band radially superimposed on said belt structure; a pair of sidewalls applied laterally on opposite sides with respect to said carcass structure.

It is well known that the belt structure may exert a very important influence both on the performances of the tire (for example, in terms of prompt response to steering and of direction steadiness) and on the service life thereof, in particular on the wear speed and evenness of the tread band. As a matter of fact an uneaven wear adversely affects the drive behaviour of the tire giving rise to vibrations and continuous deviations of the vehicle from its trajectory.

For example, European Patent Application EP-A-572,906 discloses a tire provided with a carcass of the radial type, having a belt structure comprising two radially superposed layers of metal fabric reinforced with cords disposed obliquily to the circumferential direction of the tire and crossed with one another, and a reinforcing ring on each end of said two layers, comprising at least one rubberized fabric band reinforced with high-elongation metal strips directed circumferentially. In the vulcanized tire dismantled from the vehicle and inflated to the use pressure, said rings lie in the same cylindrical surface coaxial with the tire, whereas the intermediate belt portion seen in right section exhibits a profile convex to the outside. The abovementioned tire is said to have an improved wear evenness and yield per kilometer of the tread band and improved performances. Moreover, the abovementioned tire is said to be particularly useful for trucks.

European Patent Application EP-A-785,096 discloses a tire for motor-vehicles, in particular a tire for heavy load vehicles, comprising a carcass structure, a tread band extending circumferentially around said carcass structure, a belt structure circumferentially interposed between the carcass structure and the tread band and comprising at least one pair of radially superposed belt strips axially extending substantially as much as said tread band, of which the first belt strip faces the carcass structure and has a plurality of cords oriented obliquely to the equatorial plane of the tire, whereas the second belt strip extends circumferentially around said first belt strip and has cords oriented obliquely to said equatorial plane in a direction opposite to the orientation of the cords in the first belt strip, and a pair of side straps each of which is disposed adjacent to a respective side edge of the second belt strip and comprises a plurality of cord coils circumferentially wound on said second belt strip in two radially superposed layers formed of several coils disposed in axial side by side relation, wherein said first belt strip facing said carcass ply has a maximum width larger than the second belt strip. The abovementioned tire is said to have an improved wear eveness in particular at the critical areas of the tire such as the tread shoulders.

European Patent Application EP-A-937,589 discloses a radial tire provided with a metal belt comprising two load-bearing strips, respectively a first one and a second one, with reinforcing elements inclined in opposite directions in the two strips relative to the equatorial plane, and a pair of lateral bands radially superimposed on the ends of the second strip. The second strip has an axial width less than the first one and has edges staggered axially inwards with respect to the edges of the first strip. Each band comprises a single layer of circumferential metal reinforcing elements and has its axially external edge staggered axially inwards with respect to the edge of the second strip. A third strip with inclined reinforcing elements is arranged in the radially outermost position of the belt and covers at least two thirds of the width of each band. The pair of bands covers at least partially the two ends of the second strip in a diverging configuration relative to the two ends of the first strip. The abovementioned tire is said to have an improved comfort and good operating performance. Moreover, the abovementioned tire is said to be particularly useful for heavy trasportation vehicles such as trucks, buses.

European Patent Application EP-A-280,442 discloses a vehicle tyre comprising a pair of bead cores, a carcass each end of which is turned up around each bead core, a tread on the carcass, and a breaker between the carcass and the tread, wherein the breaker, comprises a first belt layer including a plurality of plies of substantially inextensible cords, a second belt layer disposed radially outside the first belt layer and having at least one ply of substantially inextensible organic cords made of aromatic polyamide fibre, and an intermediate rubber disposed between the first belt layer and the second belt layer. EP-A-280,442 also discloses base rubbers at each side of the rubber tread, which are disposed radially outside the breaker ends over the first belt layer edge and the second belt layer edge.

The Applicant has faced the problem of providing a tire, in particular for heavy transportation vehicles such as, for example, trucks, buses, having both an improved structural integrity of the belt structure and an improved wear evenness of the tread band.

In this respect, the Applicant has noticed that sometimes, during use of the tire, in particular in proximity of the axially external edges of the belt structure, some premature and dangerous separations of the belt structure layers from each others and from the carcass may occur, which result in the tire becoming out of use. Moreover, the Applicant has noticed that, in particular at the shoulder region of the tire which is usually subjected to continuous microsliding on the asphalt, a premature wear may occur, which results in an uneven wear of the tread band.

The Applicant has found that it is possible to obtain a tire having both an improved structural integrity of the belt structure and an improved wear evenness of the tread band by applying at least two inserts made of crosslinked elastomeric material in proximity of the axially external edges of said belt structure. In particular, the Applicant has found that said improvements are obtained by using a crosslinked elastomeric material having a dynamic elastic modulus (E'), measured at 70°C, lower than 7 MPa, said crosslinked elastomeric material being obtained by crosslinking a crosslinkable elastomeric composition comprising at least one adhesion promoting additive.

Said adhesion promoting additive allows to obtain an improved adhesion between said inserts and the belt structure. In particular, in proximity of the axially external edges of the belt structure where the reinforcing elements (tipically, metal cords) come out from the crosslinked elastomeric material which usually coats and welds together the same, said improved adhesion allows to avoid a corrosion of the reinforcing elements which may cause structural integrity problems of the belt structure. Moreover, in proximity of said axially external edges of the belt structure, said improved adhesion allows to avoid a formation of cracks in the inserts which may cause structural integrity problems, in particular at the shoulder regions of the tire.

Furthermore, said inserts allows to avoid both premature and dangerous separations of the belt structure layers from each other and from the carcass, in particular in proximity of the axially external edges of the belt structure. Moreover, said inserts allow to avoid an uneven wear of the tread band.

According to a first aspect, the present invention relates to a tire comprising:
- a carcass structure comprising at least one carcass ply, of a substantially toroidal shape, having opposite lateral edges associated with respective right-hand and left-hand bead structures;
- a belt structure applied in a radially external position with respect to said carcass structure, said belt structure comprising:
   - a first belt layer, in a radially internal position, provided with reinforcing elements parallel to one another and inclined with respect to the equatorial plane of said tire;
   - a second belt layer radially superimposed on said first belt layer and provided with reinforcing elements parallel to one another and inclined with respect to the equatorial plane of said tire in a direction opposite to those of the first belt layer;
   - at least one reinforcing layer radially superimposed on said second belt layer, said reinforcing layer incorporating reinforcing elements oriented in a substantially circumferential direction;
- a tread band radially superimposed on said belt structure;
- two sidewalls, each sidewall being applied laterally on opposite sides with respect to said carcass structure;
- at least two inserts made of a crosslinked elastomeric material applied in a radially external position with respect to said belt structure in proximity of the axially external edges of said belt structure, each insert comprising:
   - an axially inner portion which is interposed between said belt structure and said tread band and is tapered toward the equatorial plane of said tire; and
   - an axially outer portion which is interposed between said carcass structure and the corresponding sidewall and is tapered toward the rotational axis of said tire;
wherein said crosslinked elastomeric material has a dynamic elastic modulus (E'), measured at 70°C, lower than 7 MPa, preferably of from 2.5 MPa to 6.0 MPa, more preferably of from 3.0 MPa to 5.0 MPa, and is obtained by crosslinking a crosslinkable elastomeric composition comprising:
(a) at least one diene elastomeric polymer;
(b) at least one adhesion promoting additive;
(c) sulphur or derivatives thereof in an amount higher than 3.0 phr, preferably of from 3.5 phr to 6.0 phr.

For the purposes of the present description and of the claims which follow, the term "phr" means the parts by weight of a given component of the crosslinkable elastomeric composition per 100 parts by weight of the diene elastomeric polymer.

Preferably, said crosslinked elastomeric material has a dynamic elastic modulus (E'), measured at 70°C, which is lower with respect to the dynamic elastic modulus (E'), measured at 70°C, of the tread band.

According to one preferred embodiment, said crosslinked elastomeric material has a Tan delta, measured at 70°C, lower than 0.080, preferably of from 0.030 to 0.070, more preferably of from 0.040 to 0.065.

According to a further preferred embodiment, said crosslinked elastomeric material has a IRHD hardness, measured at 100°C, higher than 45.0, more preferably of from 50.0 to 90.0, more preferably of from 55.0 to 75.0.

The dynamic elastic modulus (E') and the Tan delta may be measured using an Instron dynamic device in the traction-compression mode. The IRHD hardness may be measured according to ISO standard 48:1994. Further details regarding the above measurement methods will be given in the examples which follow.

For the purpose of the present description and of the claims which follow, except in the operating examples, or where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, said first belt layer has its axially external edges staggered axially inwards with respect to the corresponding axially external edges of said second belt layer.

According to a further preferred embodiment, said first belt layer has its axially external edges staggered axially outwards with respect to the corresponding axially external edges of said second belt layer.

According to one preferred embodiment, said at least one reinforcing layer comprises a pair of lateral reinforcing strips, each strip having its axially external edge staggered axially inwards with respect to the corresponding axially external edge of said second belt layer.

According to a further preferred embodiment, said pair of lateral reinforcing strips are substantially simmetrically arranged with respect to the equatorial plane of said tire.

According to a further preferred embodiment, said at least one reinforcing layer is a continuous layer which extends along the axial development of said belt structure.

According to one preferred embodiment, said belt structure further comprises a third belt layer, radially superimposed on said at least one reinforcing layer provided with reinforcing elements arranged parallel to one another and inclined with respect to the equatorial plane of said tire.

According to a further preferred embodiment, said third belt layer has its axially external edges staggered axially inwards with respect to the corresponding axially external edges of said at least one reinforcing layer.

According to a further preferred embodiment, said pair of lateral reinforcing strips are at least partially overlapped by said third belt layer.

According to one preferred embodiment, said at least two inserts are substantially simmetrically arranged with respect to the equatorial plane of said tire.

According to a further preferred embodiment, said each insert is positioned between the outermost layer of the belt structure and the tread band.

According to a further preferred embodiment, said each insert has an insert thickness not lower than 10%, preferably of from 20% to 60%, of the tread band thickness.

For the aim of the present description and of the claims which follow, with the wording "the insert thickness" it is intended the thickness of the insert measured at the intersection line defined by a radial plane of the tire and a plane parallel to the equatorial plane of the tire, said parallel plane passing along the axially outermost edge of the belt structure.

For the aim of the present description and of the claims which follow, with the wording "the tread band thickness" it is intended the thickness of the tread band measured at the intersection line defined by a radial plane of the tire and a plane parallel to the equatorial plane of the tire, said parallel plane passing along the axially outermost edge of the belt structure. The thickness of the tread band is measured tacking into account the radially external profile of the tread band, i.e. without considering the tread pattern.

According to a further preferred embodiment, said at least two inserts made of crosslinked elastomeric material are joined together so as to form a continuous layer of said crosslinked elastomeric material, said continuous layer being interposed between the outermost layer of the belt structure and the tread band.

According to a further preferred embodiment, said continuous layer is axially extended between the sidewalls.

According to one preferred embodiment, the diene elastomeric polymer (a) may be selected from those commonly used in sulphur-crosslinkable elastomeric compositions, that are particularly suitable for producing tires, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

According to one preferred embodiment, said crosslinkable elastomeric composition comprises at least 10% by weight, preferably from 20% by weight to 100% by weight, with respect to the total weight of the at least one diene elastomeric polymer (a), of natural rubber.

The above reported crosslinkable elastomeric composition may optionally comprise at least one elastomeric polymer of one or more monoolefins with an olefinic comonomer or derivatives thereof (a'). The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a) or an elastomeric polymer (a') functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451,604, or United States Patents US 4,742,124 and US 4,550,142).

According to one preferred embodiment, the adhesion promoting additive (b) may be selected, for example, from:
- salts of bivalent cobalt which may be selected from carboxylate compounds of formula (R-CO-O)₂Co wherein R is a C₆-C₂₄ aliphatic or aromatic group such as, for example, cobalt neodecanoate;
- organometallic complex based on boron and cobalt, the latter being linked together through oxygen (for example, the complex known under the tradename of Manobond^{®} 680C from OMG group);
- resorcinol/hexamethoxymethylenemelamine (HMMM) system or resorcinol/hexamethylenetetramine (HMT) system;
or mixtures thereof. Preferably, a mixture of an organometallic complex based on boron and cobalt with a resorcinol/hexamethoxymethylenemelamine (HMMM) system is used.

According to one preferred embodiment, said adhesion promoting additive (b) is present in the crosslinkable elastomeric composition in an amount of from 0.2 phr to 3 phr, preferably of from 0.5 phr to 2.5 phr.

According to one preferred embodiment, the sulphur or derivatives thereof (c) may be selected, for example, from:
- soluble sulphur (crystalline sulphur);
- insoluble sulphur (polymeric sulphur);
- sulphur dispersed in oil (for example 33% sulphur known under the trade name Crystex^{®} OT33 from Flexsys);
- sulphur donors such as, for example, tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylenesulphenamide (OTOS), dithiodimorpholine (DTM or DTDM), caprolactam disulphide (CLD);
or mixtures thereof.

At least one reinforcing filler may advantageously be added to the crosslinkable elastomeric composition above disclosed, in an amount generally of from 10 phr to 120 phr, preferably of from 20 phr to 90 phr. The reinforcing filler may be selected from those commonly used for crosslinked manufactured products, in particular for tires, such as, for example, carbon black, silica, alumina, aluminosilicates, calcium carbonate, kaolin, or mixtures thereof.

The types of carbon black which may be advantageously used according to the present invention may be selected from those conventionally used in the production of tires, generally having a surface area of not less than 20 m²/g (determined by CTAB absorption as described in ISO standard 6810).

The silica which may be advantageously used according to the present invention may generally be a pyrogenic silica or, preferably, a precipitated silica, with a BET surface area (measured according to ISO standard 5794/1) of from 50 m²/g to 500 m²/g, preferably of from 70 m²/g to 200 m²/g.

When a reinforcing filler comprising silica is present, the crosslinkable elastomeric composition may advantageously incorporate a coupling agent capable of interacting with the silica and of linking it to the diene elastomeric polymer during the vulcanization.

Coupling agents that are preferably used are those based on silane which may be identified, for example, by the following structural formula (I):

(R)₃Si-CₙH₂ₙ-X (I)

in which the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, (S)ₘCₙH₂ₙ-Si- (R)₃ in which m and n are integers between 1 and 6 inclusive and the groups R are defined as above.

Among the coupling agents that are particularly preferred are bis(3-triethoxysilylpropyl) tetrasulphide and bis(3-triethoxysilylpropyl) disulphide. Said coupling agents may be used as such or as a suitable mixture with an inert filler (for example carbon black) so as to facilitate their incorporation into the crosslinkable elastomeric composition.

The crosslinkable elastomeric composition above disclosed may be vulcanized according to known techniques. To this end, in the crosslinkable elastomeric composition, after one or more steps of thermomechanical processing, the sulphur or derivatives thereof are incorporated together with vulcanization activators and accelerators. In the final processing step, the temperature is generally kept below 120°C and preferably below 100°C, so as to avoid any unwanted pre-crosslinking phenomena.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, anti-ozone agents, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges from 0 phr to 70 phr, preferably from 5 phr to 30 phr.

The crosslinkable elastomeric composition above disclosed may be prepared by mixing together the diene elastomeric polymer, the adhesion promoting additive, the sulphur or derivatives thereof with the reinforcing filler and the other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twinscrew type.

Additional features and advantages of the invention will be better apparent from the following description of some preferred embodiments of a tire according to the present invention, which description is made, by way of non-limiting example, with reference to the attached Fig. 1-3 wherein:
- Fig. 1 is a view in cross-section of a portion of a tire according to the present invention;
- Fig. 2 is a view in cross-section of a portion of a further embodiment of a tire according to the present invention.

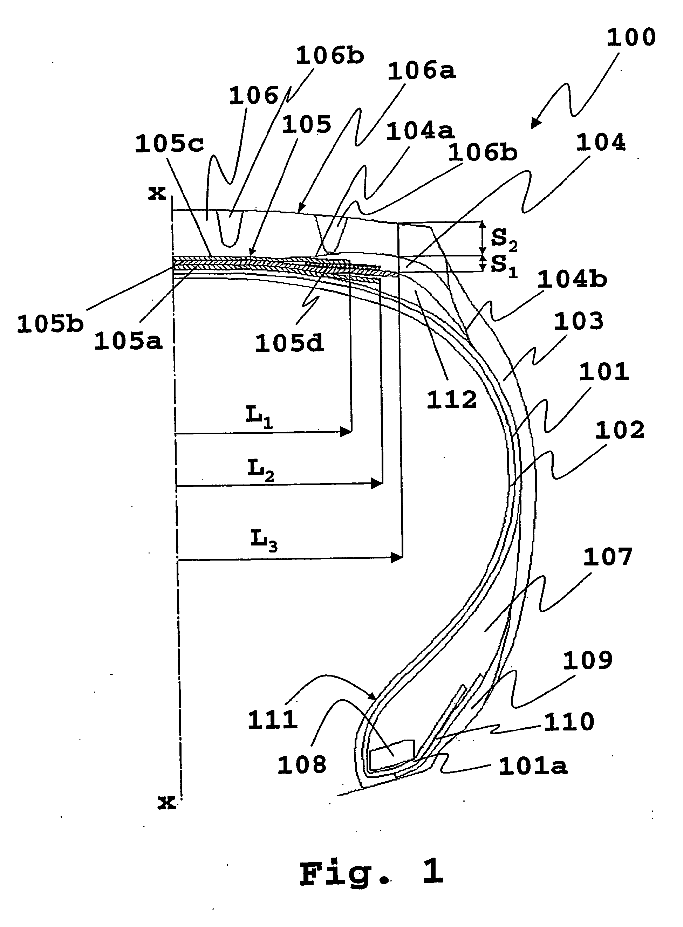

For simplicity, Fig. 1 shows only a portion of the tire, the remaining portion not represented being identical and simmetrically arranged with respect to the equatorial plane (x-x) of the tire. The tire (100) comprises at least one carcass ply (101), the opposite lateral edges of which are associated with respective bead structures comprising at least one bead core (108) and at least one bead filler (107). The association between the carcass ply (101) and the bead core (108) is achieved here by folding back the opposite lateral edges of the carcass ply (101) around the bead core (108) so as to form the so-called carcass back-fold (101a) as shown in Fig. 1.

Alternatively, the conventional bead core (108) may be replaced with at least one annular insert formed from rubberized wires arranged in concentric coils (not represented in Fig. 1) (see, for example, European Patent Applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing elements arranged parallel to each other and at least partially coated with a layer of a crosslinked elastomeric material. These reinforcing elements are usually made of steel wires stranded together, coated with a metal alloy (for example copper/zinc, zinc/manganese, zinc/molybdenum/cobalt alloys and the like) or of textile fibres, for example rayon, nylon or polyethylene terephthalate.

The carcass ply (101) is usually of radial type, i.e. it incorporates reinforcing elements arranged in a substantially perpendicular direction relative to a circumferential direction. The bead core (108) is enclosed in a bead (111), defined along an inner circumferential edge of the tire (100), with which the tire engages on a rim (not represented in Fig. 1) forming part of a vehicle wheel. The space defined by each carcass back-fold (101a) contains a bead filler (107) usually made of a crosslinked elastomeric material, wherein the bead core (108) is embedded.

An antiabrasive strip (109) is usually placed in an axially external position relative to the carcass back-fold (101a).

A reinforcing layer (110), known as "flipper", is usually wound around the core (108) and the bead filler (107) so as to at least partially envelope them.

A belt structure (105) is applied along the circumference of the carcass ply (101). In the particular embodiment in Fig. 1, the belt structure (105) comprises two belt layer (105a) and (105b) which are radially superposed and which incorporate a plurality of reinforcing elements, typically metal cords, said reinforcing elements being parallel to each other in each layer and intersecting with respect to the adjacent layer, inclined preferably in a symmetrical manner with respect to the equatorial plane (x-x) of the tire at an angle of from 10° to 40°, preferably of from 12° to 30°, and coated and welded together by means of a crosslinked elastomeric material.

Furthermore, the belt structure (105) comprises a lateral reinforcing strip (105d), commonly known as "zero-degree reinforcing strip", radially superimposed on the second belt layer (105b). Said reinforcing strip (105d) generally incorporates a plurality of reinforcing elements, typically metal cords with a breakage elongation value of from 3% to 10%, preferably of from 3.5% to 7%, said reinforcing elements being oriented in a substantially circumferential direction forming an angle of a few degrees (i.e. 0°) with respect to the equatorial plane (x-x) of the tire, and coated and welded together by means of a crosslinked elastomeric material. Alternatively, instead of two lateral reinforcing strips, a continuous reinforcing layer, generally incorporating a plurality of reinforcing elements of the same kind above disclosed, which extends along the axial development of said belt structure may be present (not represented in Fig. 1).

Moreover, the belt structure (105) comprises a third belt layer (105c) radially superimposed on the second belt layer (105b) provided with reinforcing elements, typically metal cords, said reinforcing elements being arranged parallel to one another, inclined with respect to the equatorial plane (x-x) of the tire by an angle of from 10° to 70°, preferably of from 12° to 40°, and coated and welded together by means of a crosslinked elastomeric material. Preferably, said reinforcing elements includes at least one preformed metal wire (see, for example, European Patent EP 1,141,477). Said third belt layer (105c) acts as a protection layer from stones or gravel possibly entrapped into the tread grooves (106b) and which may cause damages to the belt layers (105a) and (105b) and even to the carcass ply (101).

In the particular embodiment of Fig. 1, the axial width of the belt structure (105) corresponds to the axial width (L₃) of the second belt layer (105b), measured between its edges parallel to the axis of rotation of the tire (100). Preferably, the maximum width of the belt structure (105) is equal to 90% of the total axial width of the tread band (106).

The first belt layer (105a) has a axial width (L₂) which is lower than the axial width (L₃) of the second belt layer (105b), so that its axially external edge is staggered axially inwards by a predetermined distance with respect to the corresponding axially external edge of the second belt layer (105b). Usually, said predetermined distance is of from 2 mm to 20 mm, preferably of from 5 mm to 10 mm.

The lateral reinforcing strip (105d) has its axially external edge which is staggered axially inwards by a predetermined distance with respect to the axially external edge of the second belt layer (105b). Usually, said predetermined distance is of from 2 mm to 30 mm, preferably of from 5 mm to 10 mm.

The third belt layer (105c) has a axial width L₁ and has its axially external edge which is staggered axially inwards with respect to the axially external edge of the reinforcing strip (105d). Preferably, said third belt layer (105c) covers a portion of at least 3%, preferably of from 10% to 95%, of said reinforcing strip (105d).

An insert (104) is located at the buttress area, i.e. the area where the lateral edges of the tread band (106) is connected to the sidewall (103). Usually, the insert (104) is interposed between the carcass ply (101), the belt structure (105), the tread band (106) and the sidewall (103).

More in details, the insert (104) comprises an axially inner portion (104a) which is interposed between the belt structure (105) and the tread band (106) and is tapered towards the equatorial plane (x-x) of the tire, and an axially outer portion (104b) which is interposed between the carcass ply (101) and the correspondent sidewall (103) and is tapered towards the rotational axis of the tire.

Preferably, said insert (104) has a thickness S₁ which is at least 10%, preferably of from 20% to 60%, of the thickness S_{2.}

A further insert (112) made of a crosslinked elastomeric material is interposed between the carcass ply (101) and the insert (104).

A side wall (103) is applied externally onto the carcass ply (101), this sidewall extending, in an axially external position, from the bead (111) to the end of the belt structure (105).

A tread band (106), whose lateral edges are connected to the sidewall (103), is applied circumferentially in a position radially external to the belt structure (105). Externally, the tread band (106) has a rolling surface (106a) designed to come into contact with the ground. Circumferential grooves (106b) which are connected by transverse notches (not represented in Fig. 1) so as to define a tread pattern which comprises a plurality of blocks of various shapes and sizes distributed over the rolling surface (106a) are generally made in this surface (106a).

In the case of tubeless tires, a rubber layer (102) generally known as a liner, which provides the necessary impermeability to the inflation air of the tire, may also be provided in an inner position relative to the carcass ply (101).

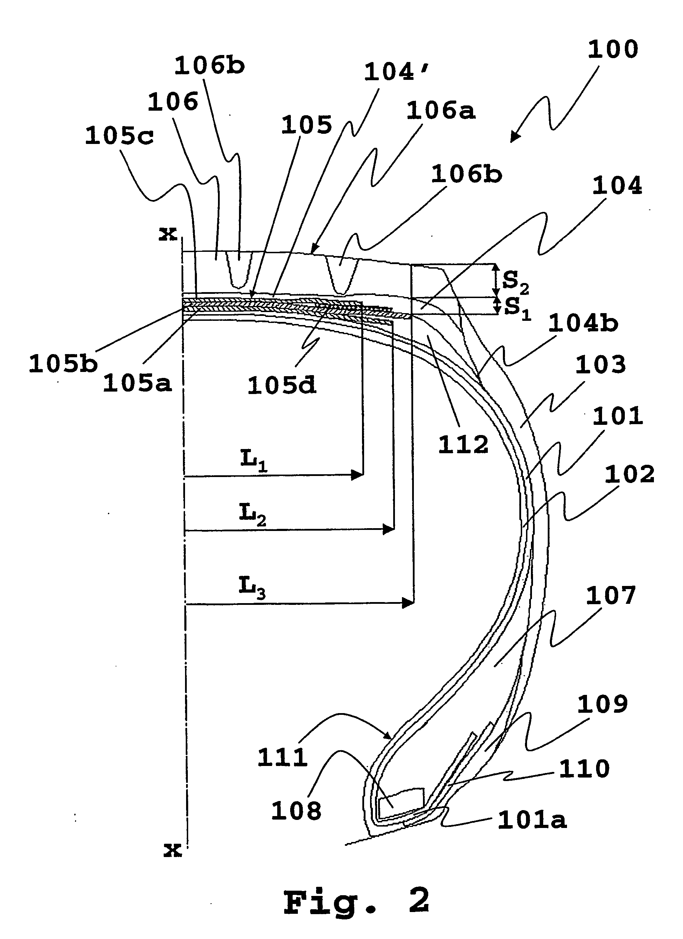

Fig. 2 shows a tire (100) having a structure as described in Fig. 1 wherein a continuous layer of a crosslinked elastomeric material (104') is interposed betwen the outermost layer of the belt structure (105), namely the third belt layer(105 c) and the tread band (106). Said continuous layer (104') has its axially outer portion (104b) which is interposed between the carcass ply (101) and the corresponding sidewall (103) and is tapered toward the rotational axis of the tire.

The process for producing the tire according to the present invention may be carried out according to techniques and using apparatus that are known in the art, as described, for example, in European Patents EP 199,064, and in United States Patents US 4,872,822 or US 4,768,937, said process including at least one step of manufacturing the crude tire and at least one step of vulcanizing this tire.

More particularly, the process for producing the tire comprises the steps of preparing, beforehand and separately from each other, a series of semi-finished products corresponding to the various structural elements of the tire (carcass plies, belt structure, bead wires, fillers, sidewalls and tread band) which are then combined together using a suitable manufacturing machine. Next, the subsequent vulcanization step welds the abovementioned semi-finished products together to give a monolithic block, i.e. the finished tire.

The step of preparing the abovementioned semi-finished products will be preceded by a step of preparing and moulding the various crosslikable elastomeric compositions, of which said semi-finished products are made, according to conventional techniques.

The crude tire thus obtained is then passed to the subsequent steps of moulding and vulcanization. To this end, a vulcanization mould is used which is designed to receive the tire being processed inside a moulding cavity having walls which are countermoulded to define the outer surface of the tire when the vulcanization is complete.

Alternative processes for producing a tire or parts of a tire without using semi-finished products are disclosed, for example, in the abovementioned European Patent Applications EP 928,680 and EP 928,702.

According to one preferred embodiment, said structural elements of the tire are formed by a plurality of coils of a continuous elongated element. Said elongated element may be produced, for example, by extruding the crosslinkable elastomeric compositions from which their are made. Preferably, said structural elements are assembled onto a support.

For the purposes of the present description and of the claims which follow, the term "support" is used to indicate the following devices:
- an auxiliary drum having a cilindrical shape, said auxiliary drum preferably supporting a belt structure;
- a shaping drum having a substantially toroidal configuration, said shaping drum preferably supporting at least one carcass structure with a belt structure assembled thereon;
- a rigid support preferably shaped according to the inner configuration of the tire.

Further details regarding said devices and the methods of forming and/or depositing the structural elements of the tire on a support are described, for example, in International Patent Application WO 01/36185 and in European Patent EP 976,536 in the name of the Applicant, and in European Patent Applications: EP 968,814, EP 1,201,414 and EP 1,211,057.

The crude tire may be moulded by introducing a pressurized fluid into the space defined by the inner surface of the tire, so as to press the outer surface of the crude tire against the walls of the moulding cavity. In one of the moulding methods widely practised, a vulcanization chamber made of elastomeric material, filled with steam and/or another fluid under pressure, is inflated inside the tire closed inside the moulding cavity. In this way, the crude tire is pushed against the inner walls of the moulding cavity, thus obtaining the desired moulding. Alternatively, the moulding may be carried out without an inflatable vulcanization chamber, by providing inside the tire a toroidal metal support shaped according to the configuration of the inner surface of the tire to be obtained as described, for example, in Europen Patent EP 1,189,744.

At this point, the step of vulcanizing the crude tire is carried out. To this end, the outer wall of the vulcanization mould is placed in contact with a heating fluid (generally steam) such that the outer wall reaches a maximum temperature generally of from 100°C to 230°C. Simultaneously, the inner surface of the tire is heated to the vulcanization temperature using the same pressurized fluid used to press the tire against the walls of the moulding cavity, heated to a maximum temperature of from 100°C to 250°C. The time required to obtain a satisfactory degree of vulcanization throughout the mass of the elastomeric composition may vary in general from 3 min to 90 min and depends mainly on the dimensions of the tire. When the vulcanization is complete, the tire is removed from the vulcanization mould.

The present invention will be further illustrated below by means of a number of preparation examples, which are given for purely indicative purposes and without any limitation of this invention.

### EXAMPLE 1

### Preparation of the crosslinkable elastomeric composition

The composition given in Table 1 was prepared (the amounts are given in phr).

**TABLE 1**

| INGREDIENTS | EXAMPLE 1 |
|---|---|
| 1^{st} STEP | |
| NR | 80 |
| BR | 20 |
| Stearic acid | 1.5 |
| Zinc oxide | 5.0 |
| Rhenogran Resorcinol^{®} 80 | 0.5 |
| Wax | 0.5 |
| N326 | 40 |
| Silica | 5.0 |
| TMQ | 1.0 |
| 6-PPD | 1.0 |
| Manobond^{®} 680C | 1.0 |

| 2^{nd} STEP | |
|---|---|
| 33% insoluble sulphur | 3.25 |
| CTP | 0.1 |
| HMMM | 1.0 |
| TBBS | 1.5 |

| | |
|---|---|
| NR: natural rubber; BR: high-cis 1,4 polybutadiene (Europrene^{®} Neocis BR40 - Polimeri Europa); Rhenogran Resorcinol^{®} 80: 80% resorcinol supported with a polymeric excipient (Rhein-Chemie); N326: carbon black; TMQ: polymerized 2,2,4-trimethyl-1,2-dihydroquinoline (Vulcanox^{®} 4020 - Bayer); 6-PPD: para-phenylenediamine (Santoflex^{®} 13 - Monsanto); Manobond^{®} 680C: complex based on boron and cobalt (OMG group); 33% insoluble sulphur: Crystex^{®} OT33 (Flexsys); CTP: cyclohexylthiophthalimide (Vulkalent^{®} G - Bayer); HMMM: hexamethoxymethylenemelamine (Cyrez^{®} 963 - Cytec); TBBS: N-t-butyl-2-benzothiazilsulphenamide (Vulkacit^{®} NZ - Bayer). | |

The dynamic mechanical properties were measured using an Instron dynamic device in the traction-compression mode according to the following methods. A test piece of the abovementioned crosslinked elastomeric composition (vulcanized at 170°C for 10 min) having a cylindrical form (length = 25 mm; diameter = 12 mm), compression-preloaded up to a 10% longitudinal deformation with respect to the initial length, and kept at the prefixed temperature (70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E'). The results obtained are given in Table 2.

Table 2 also shows the hardness in IRHD degrees at 100°C according to ISO standard 48:1994, which was measured on samples of the abovementioned elastomeric composition vulcanized at 170°C for 10 min. The results obtained are given in Table 2.

**TABLE 2**

| EXAMPLE | 1 |
|---|---|
| DYNAMIC MECHANICAL PROPERTIES | |
| E' (70°C) | 4.4 |
| Tandelta (70°C) | 0.060 |
| IRHD Hardness (100°C) | 60.6 |

### EXAMPLE 2

A truck tire according to the invention (as represented in Fig. 1) having size 295/80R22.5 was made using the elastomeric composition according to Example 1 for the insert (104).

The above mentioned tire was subjected to a high speed durability test on a laboratory machine (indoor test). To this end, the tire, at an inflation pressure of 5 bar, subjected to a load of 2600 Kg, was rotated on a drum at increasing speed until the tire failed. The tire did not fail for an overall duration of the test of 50 hours reaching a maximun speed of 110 km/h.

## Claims

1. Tire (100) comprising:
- a carcass structure comprising at least one carcass ply (101), of a substantially toroidal shape, having opposite lateral edges associated with respective right-hand and left-hand bead structures (111);
- a belt structure (105) applied in a radially external position with respect to said carcass structure, said belt structure (105) comprising:
- a first belt layer (105a), in a radially internal position, provided with reinforcing elements parallel to one another and inclined with respect to the equatorial plane of said tire;
- a second belt layer (105b) radially superimposed on said first belt layer (105a) and provided with reinforcing elements parallel to one another and inclined with respect to the equatorial plane of said tire in a direction opposite to those of the first belt layer;
- at least one reinforcing layer (105d) radially superimposed on said second belt layer (105b), said reinforcing layer incorporating reinforcing elements oriented in a substantially circumferential direction;
- a tread band (106) radically superimposed on said belt structure;
- two sidewalls (103), each sidewall (103) being applied laterally on opposite sides with respect to said carcass structure;
- at least two inserts (104) made of a crosslinked elastomeric material applied in a radially external position with respect to said belt structure (105) in proximity of the axially external edges of said belt structure (105), each insert comprising:
- an axially inner portion (104a) which is interposed between said belt structure and said tread band and is tapered toward the equatorial plane (x) of said tire (100); and
- an axially outer portion (104b) which is interposed between
said carcass structure and the corresponding sidewall (103) and is tapered toward the rotational axis of said tire;
wherein said crosslinked elastomeric material has a dynamic elastic modulus (E'), measured at 70°C, lower than 7 MPa, and is obtained by crosslinking a crosslinkable elastomeric composition comprising:
(a) at least one diene elastomeric polymer;
(b) at least one adhesion promoting additive;
(c) sulphur or derivatives thereof in an amount higher than 3.0 phr.

2. Tire according to claim 1, wherein said crosslinked elastomeric material has a dynamic elastic modulus (E'), measured at 70°C, of from 2.5 MPa to 6.0 MPa.

3. Tire according to claim 2, wherein said crosslinked elastomeric material has a dynamic elastic modulus (E'), measured at 70°C, of from 3.0 MPa to 5.0 MPa.

4. Tire according to claim 1, wherein said crosslinked elastomeric material has a dynamic elastic modulus (E'), measured at 70°C, which is lower with respect to the dynamic elastic modulus (E'), measured at 70°C, of the tread band.

5. Tire according to any one of the preceding claims, wherein said crosslinked elastomeric material has a Tan delta, measured at 70°C, lower than 0.080.

6. Tire according to claim 5, wherein said crosslinked elastomeric material has a Tan delta, measured at 70°C, of from 0.030 to 0.070.

7. Tire according to claim 6, wherein said crosslinked elastomeric material has a Tan delta, measured at 70°C, of from 0.040 to 0.065,

8. Tire according to any one of the preceding claims, wherein said crosslinked elastomeric material has a IRHD hardness, measured at 100°C, higher than 45.0.

9. Tire according to claim 8, wherein said crosslinked elastomeric material has a IRHD hardness, measured at 100°C, of from 50.0 to 90.0.

10. Tire according to claim 9, wherein said crosslinked elastomeric material has a IRHD hardness, measured at 100°C, of from 55.0 to 75.0.

11. Tire according to any one of the preceding claims, wherein said first belt layer (105a) has its axially external edges staggered axially inwards with respect to the corresponding axially external edges of said second belt layer (105b).

12. Tire according to any one of claims 1 to 10, wherein said first belt layer (105a) has its axially external edges staggered axially outwards with respect to the corresponding axially external edges of said second belt layer (105b).

13. Tire according to any one of the preceding claims, wherein said at least one reinforcing layer (105d) comprises a pair of lateral reinforcing strips, each strip having its axially external edge staggered axially inwards with respect to the corresponding axially external edge of said second belt layer (105b).

14. Tire according to claim 13, wherein said pair of lateral reinforcing strips are substantially simmetrically arranged with respect to the equatorial plane (x) of said tire (100).

15. Tire according to any one of claims 1 to 12, wherein said at least one reinforcing layer (105d) is a continuous layer which extends along the axial development of said belt structure (105).

16. Tire according to any one of the preceding claims, wherein said belt structure (105) further comprises a third belt layer (105c), radially superimposed on said at least one reinforcing layer (105d) provided with reinforcing elements arranged parallel to one another and inclined with respect to the equatorial plane (x) of said tire (100).

17. Tire according to claim 16, wherein said third belt layer (105c) has its axially external edges staggered axially inwards with respect to the corresponding axially external edges of said at least one reinforcing layer (105d).

18. Tire according to claim 16 or 17, wherein said third belt layer (105c) at least partially overlaps a pair of lateral reinforcing strips according to claims 13 or 14.

19. Tire according to any one of the preceding claims, wherein said at least two inserts (104) are substantially simmetrically arranged with respect to the equatorial plane (x) of said tire (100).

20. Tire according to any one of the preceding claims, wherein said each insert (104) is positioned between the outermost layer of the belt structure (105) and the tread band (106).

21. Tire according to any one of the preceding claims, wherein said each insert (104) has an insert thickness not lower than 10% of the tread band (106) thickness.

22. Tire according to claim 21, wherein said each insert (104) has an insert thickness of from 20% to 60% of the tread band (106) thickness.

23. Tire according to any one of the preceding claims, wherein said at least two inserts (104) made of crosslinked elastomeric material are joined together so as to form a continuous layer of said crosslinked elastomeric material, said continuous layer being interposed between the outermost layer of the belt structure (105) and the tread band (106).

24. Tire according to claim 23, wherein said continuous layer is axially extended between the sidewalls (103).

25. Tire according to any one of the preceding claims, wherein said crosslinkable elastomeric composition comprises sulphur or derivatives thereof in an amount of from 3.5 phr to 6.0 phr.

26. tire according to any one of the preceding claims claims, wherein said diene elastomeric polymer is selected from sulphur-crosslinkable elastomeric polymers or copolymers with an unsaturated chain having a glass transition temperature below 20°C.

27. Tire according to claim 26, wherein said diene elastomeric polymer is selected from: natural or synthetic cis-1,4-polyisoprene, 3,4-polyisoprene, polybutadiene, optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

28. Tire according to any one of the preceding claims, wherein said crosslinkable elastomeric composition comprises at least 10% by weight with respect to the total weight of the at least one diene elastomeric polymer (a) of natural rubber.

29. Tyre for vehicle wheels according to claim 28, wherein said crosslinkable elastomeric composition comprises from 20% by weight to 100% by weight with respect to the total weight of the at least one diene elastomeric polymer (a) of natural rubber.

30. Tire according to any one of the preceding claims, wherein said crosslinkable elastomeric composition comprises at least one elastomeric polymers of one or more monoolefins with an olefinic comonomer and at least one diene, or derivatives thereof.

31. Tire according to claim 30, wherein said elastomeric polymer is selected from: ethylene/propylene copolymers (EPR) or ethylene/propylene/diene copolymers (EPDM); polyisobutene; butyl rubbers; halobutyl rubbers; or mixtures thereof.

32. Tire according to any one of the preceding claims, wherein said adhesion promoting additive (b) is selected from:
- salts of bivalent cobalt which are selected from carboxylate compounds of formula (R-CO-O)₂C_{O} wherein R is a C₆-C₂₄ aliphatic or aromatic group such as cobalt neodecanoate;
- organometallic complex based on boron and cobalt, the latter being linked together through oxygen;
- resorcinol/hexamethoxymethylenemelamine (HMMM) system or resorcinol/hexamethylenetetramine (HMT) system;
or mixtures thereof.

33. Tire according to claim 32, wherein said adhesion promoting additive (b) is a mixture of an organometallic complex based on boron and cobalt with a resorcinol/hexamethoxymethylenemelamine (HMMM) system.

34. Tire according to claim 32 or 33, wherein said adhesion promoting additive (b) is present in said crosslinkable elastomeric composition in an amount of from 0.2 phr to 3 phr.

35. Tire according to claim 34, wherein said adhesion promoting additive (b) is present in said crosslinkable elastomeric composition in an amount of from 0.5 phr to 2.5 phr.

36. Tire according to any one of the preceding claims, wherein said sulphur or derivatives thereof (c) is selected from:
- soluble sulphur (crystalline sulphur);
- insoluble sulphur (polymeric sulphur);
- sulphur dispersed in oil;
- sulphur donors such as tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylenesulphenamide (OTOS), dithiodimorpholine (DTM or DTDM), caprolactam disulphide (CLD);
or mixtures thereof.

37. Tire according to any one of the preceding claims, wherein said crosslinkable elastomeric composition, comprises at least one reinforcing filler in an amount of from 10 phr to 120 phr.

38. Tire according to claim 37, wherein said at least one reinforcing filler is selected from carbon black, silica, alumina, aluminosilicates, calcium carbonate, kaolin, or mixtures thereof.

## Patentansprüche

1. Reifen (100) umfassend:
- eine Karkassenstruktur, umfassend zumindest eine Karkassenlage (101) mit im Wesentlichen Toroidform mit entgegengesetzten lateralen Kanten, die mit den entsprechenden rechten und linken Wulststrukturen (111) assoziiert sind;
- eine Riemenstruktur (105), aufgetragen in radial externer Position in Bezug auf die Karkassenstruktur, worin die Riemenstruktur (105) umfasst:
- eine erste Riemenschicht (105a) in einer radial internen Position, versehen mit Verstärkungselementen parallel zueinander und in Bezug auf die Äquatorialebene des Reifens geneigt;
- eine zweite Riemenschicht (105b), radial auf der ersten Riemenschicht (105a) angeordnet und mit Verstärkungselementen parallel zueinander und in Bezug auf die Äquatorialebene des Reifens in einer Richtung versehen, die zu jener der ersten Riemenschicht entgegengesetzt ist;
- zumindest eine Verstärkungsschicht (105d), die radial auf der zweiten Riemenschicht (105b) gelegen ist, wobei die Verstärkungsschicht Verstärkungselemente enthält, die in einer im Wesentlichen umlaufenden Richtung orientiert sind;
- ein Laufflächenband (106), das radial auf der Riemenstruktur gelegen ist;
- zwei Seitenwände (103), wobei jede Seitenwand (103) lateral auf entgegengesetzten Seiten in Bezug auf die Karkassenstruktur aufgetragen ist;
- zumindest zwei Einfügungen (104) aus einem vernetzten, elastomeren Material, das in einer radial externen Position in Bezug auf die Riemenstruktur (105) in der Nähe der axial externen Kanten der Riemenstruktur (105) aufgetragen ist, wobei jede Einfügung umfasst:
- einen axial inneren Bereich (104a), der zwischen der Riemenstruktur und dem Laufflächenband angeordnet ist und in Richtung zur Äquatorialebene (x) des Reifens (100) kegelförmig angeordnet ist; und
- einen axial äußeren Bereich (104b), der zwischen der Karkassenstruktur und der entsprechenden Seitenwand (103) angeordnet ist und in Richtung zur Rotationsachse des Reifens kegelförmig angeordnet ist;
worin das vernetzte, elastomere Material einen dynamischen elastischen Modul (E'), gemessen bei 70°C, von weniger als 7 MPa aufweist und durch Vernetzen einer vernetzbaren, elastomeren Zusammensetzung erhalten ist, umfassend
(a) zumindest ein elastomeres Dienpolymer;
(b) zumindest ein die Adhäsion förderndes Additiv;
(c) Schwefel oder Derivate davon in einer Menge von mehr als 3,0 phr.

2. Reifen nach Anspruch 1, worin das vernetzte, elastomere Material einen dynamischen elastischen Modul (E'), gemessen bei 70°C, von 2,5 bis 6,0 MPa hat.

3. Reifen nach Anspruch 2, worin das vernetzte, elastomere Material einen dynamischen elastischen Modul (E'), gemessen bei 70°C, von 3,0 bis 5,0 MPa hat.

4. Reifen nach Anspruch 1, worin das vernetzte, elastomere Material einen dynamischen elastischen Modul (E'), gemessen bei 70°C, aufweist, der niedriger in Bezug auf den dynamischen elastischen Modul (E'), gemessen bei 70°C, des Reifenbandes ist.

5. Reifen nach einem der vorhergehenden Ansprüche, worin das vernetzte, elastomere Material ein Tan delta, gemessen bei 70°C, von weniger als 0,080 hat.

6. Reifen nach Anspruch 5, worin das vernetzte, elastomere Material ein Tan delta, gemessen bei 70°C, von 0,030 bis 0,070 hat.

7. Reifen nach Anspruch 6, worin das vernetzte, elastomere Material ein Tang delta, gemessen bei 70°C, von 0,040 bis 0,065 hat.

8. Reifen nach einem der vorhergehenden Ansprüche, worin das vernetzte, elastomere Material eine IRHD-Härte, gemessen bei 100°C, von mehr als 45,0 hat.

9. Reifen nach Anspruch 8, worin das vernetzte, elastomere Material eine IRHD-Härte, gemessen bei 100°C, von 50,0 bis 90,0 hat.

10. Reifen nach Anspruch 9, worin das vernetzte, elastomere Material eine IRHD-Härte, gemessen bei 100°C, von 55,0 bis 75,0 hat.

11. Reifen nach einem der vorhergehenden Ansprüche, worin die erste Riemenschicht (105a) ihre axial externen Kanten axial nach innen in Bezug auf die entsprechenden axial externen Kanten der zweiten Riemenschicht (105b) hat.

12. Reifen nach einem der Ansprüche 1 bis 10, worin die erste Riemenschicht (105a) ihre axial externen Kanten axial nach außen in Bezug auf die entsprechenden axial externen Kanten der zweiten Riemenschicht (105b) abgestuft aufweist.

13. Reifen nach einem der vorhergehenden Ansprüche, worin die zumindest eine Verstärkungsschicht (105d) ein Paar laterale Verstärkungsstreifen umfasst, wobei jeder Streifen seine axial externe Kante axial nach innen in Bezug auf die entsprechenden axial externen Kanten der zweiten Riemenschicht (105b) abgestuft aufweist.

14. Reifen nach Anspruch 13, worin das Paar der lateralen Verstärkungsstreifen im Wesentlichen symmetrisch in Bezug auf die Äquatorialebene (x) des Reifens (100) angeordnet ist.

15. Reifen nach einem der Ansprüche 1 bis 12, worin die zumindest eine Verstärkungsschicht (105d) eine kontinuierliche Schicht ist, die sich entlang der axialen Ausbildung der Riemenstruktur (105) erstreckt.

16. Reifen nach einem der vorhergehenden Ansprüche, worin die Riemenstruktur (105) weiterhin eine dritte Riemenschicht (105c) umfasst, die radial auf der zumindest einen Verstärkungsschicht (105d) gelegen ist, die mit Verstärkungselementen versehen ist, die parallel zueinander und in Bezug auf die Äquatorialebene (x) des Reifens (100) geneigt angeordnet sind.

17. Reifen nach Anspruch 16, worin die dritte Riemenschicht (105c) ihre axial externen Kanten axial nach innen in Bezug auf die entsprechenden axial externen Kanten der zumindest einen Verstärkungsschicht (105d) gestuft aufweist.

18. Reifen nach Anspruch 16 oder 17, worin die dritte Riemenschicht (105c) zumindest teilweise ein Paar von lateralen Verstärkungsstreifen nach den Ansprüchen 13 oder 14 überlappt.

19. Reifen nach einem der vorhergehenden Ansprüche, worin die zumindest zwei Einfügungen (104) im Wesentlichen symmetrisch in Bezug auf die Äquatorialebene (X) des Reifens (100) angeordnet sind.

20. Reifen nach einem der vorhergehenden Ansprüche, worin die jeweilige Einfügung (104) zwischen der äußersten Schicht der Riemenstruktur (105) und dem Laufflächenband (106) positioniert ist.

21. Reifen nach einem der vorhergehenden Ansprüche, worin jede Einfügung (104) eine Einfügungsdicke von nicht weniger als 10% der Dicke des Reifenbandes (106) hat.

22. Reifen nach Anspruch 21, worin jede Einfügung (104) eine Einfügungsdicke von 20% bis 60% der Dicke des Reifenbandes (106) hat.

23. Reifen nach einem der vorhergehenden Ansprüche, worin die zumindest zwei Einfügungen (104) aus dem vernetzten, elastomeren Material miteinander verbunden sind, unter Bildung einer kontinuierlichen Schicht aus dem vernetzten, elastomeren Material, wobei die kontinuierliche Schicht zwischen der äußersten Schicht der Ringstruktur (105) und dem Reifenband (106) gelegen ist.

24. Reifen nach Anspruch 23, worin die kontinuierliche Schicht axial zwischen den Seitenwänden (103) erstreckt ist.

25. Reifen nach einem der vorhergehenden Ansprüche, worin die vernetzbare, elastomere Zusammensetzung Schwefel oder Derivate davon in einer Menge von 3,5 bis 6,0 phr umfasst.

26. Reifen nach einem der vorhergehenden Ansprüche, worin das elastomere Dienpolymer ausgewählt ist aus Schwefelvernetzbaren, elastomeren Polymeren oder Copolymeren mit einer ungesättigten Kette mit einer Glasübergangstemperatur von weniger als 20°C.

27. Reifen nach Anspruch 26, worin das elastomere Dienpolymer ausgewählt ist aus: natürlichem oder synthetischem cis-1,4-Polyisopren, 3,4-Polyisopren, Polybutadien, wahlweise halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren oder Mischungen davon.

28. Reifen nach einem der vorhergehenden Ansprüche, worin die vernetzbare, elastomere Zusammensetzung zumindest 10 Gew.% in Bezug auf das Gesamtgewicht des zumindest einen elastomeren Dienpolymers (a) eines natürlichen Gummis umfasst.

29. Reifen für Fahrzeugreifen nach Anspruch 28, worin die vernetzbare, elastomere Zusammensetzung von 20 bis 100 Gew.% in Bezug auf das Gesamtgewicht des zumindest einen elastomeren Dienpolymers (a) eines natürlichen Gummis enthält.

30. Reifen nach einem der vorhergehenden Ansprüche, worin die vernetzbare, elastomere Zusammensetzung zumindest ein elastomeres Polymer aus einem oder mehreren Monoolefinen mit einem olefinischen Comonomer und zumindest einem Dien oder Derivate davon umfasst.

31. Reifen nach Anspruch 30, worin das elastomere Polymer ausgewählt ist aus: Ethylen/Propylen-Copolymeren (EPR) oder Ethylen/Propylen/Dien-Copolymeren (EPDM), Polyisobuten, Butyl-Kautschuk, Halobutyl-Kautschuk oder Mischungen davon.

32. Reifen nach einem der vorhergehenden Ansprüche, worin das die Adhäsion fördernde Additiv (b) ausgewählt ist aus:
- Salzen von bivalentem Cobalt, ausgewählt aus Carboxylatverbindungen der Formel (R-CO-O)₂Co, worin R eine aliphatische oder aromatische C₆₋₂₄-Gruppe ist, wie Cobaltneodecanoat;
- organometallischem Komplex auf der Basis von Bor und Cobalt, wobei der zuletztgenannte durch Sauerstoff verbunden sind;
- Resorcin/Hexamethoxymethylenmelamin (HMMM)-System
oder Resorcin/Hexamethylentetramin (HMT)-System oder Mischungen davon.

33. Reifen nach Anspruch 32, worin das die Adhäsion fördernde Additiv (b) eine Mischung aus einem organometallischen Komplex auf der Basis von Bor und Cobalt mit einem Resorcin/Hexamethoxymethylenmelamin (HMMM)-System ist.

34. Reifen nach Anspruch 32 oder 33, worin das die Adhäsion fördernde Additiv (b) in der vernetzbaren, elastomeren Zusammensetzung in einer Menge von 0,2 bis 3 phr vorhanden ist.

35. Reifen nach Anspruch 34, worin das die Adhäsion fördernde Additiv (b) in der vernetzbaren, elastomeren Zusammensetzung in einer Menge von 0,5 bis 2,5 phr vorhanden ist.

36. Reifen nach einem der vorhergehenden Ansprüche, worin der Schwefel oder die Derivate davon (c) ausgewählt sind aus:
- löslichem Schwefel (kristallinem Schwefel),
- unlöslichem Schwefel (polymerem Schwefel),
- Schwefel, dispergiert in Öl,
- Schwefeldonoren wie Tetramethylthiuramdisulfid (TMTD), Tetrabenzylthiuramdisulfid (TBzTD), Tetraetylthiuramdisulfid (TETD), Tetrabutylthiuramdisulfid (MPTD), Dimethyldiphenylthiuramdisulfid (DPTD), Pentamethylenthiuramtetrasulfid oder -hexasulfid (DPTT), Morpholinbenzothiazoldisulfid (MBSS), N-Oxydiethylendithiocarbamyl-N'-oxydiethylensulfenamid (OTOS), Dithiodimorpholin (DTM oder DTDM), Caprolactamdisulfid (CLD),
oder Mischungen davon.

37. Reifen nach einem der vorhergehenden Ansprüche, worin die vernetzbare, elastomere Zusammensetzung zumindest einen Verstärkungsfüllstoff in einer Menge von 10 bis 120 phr umfasst.

38. Reifen nach Anspruch 37, worin der zumindest eine Verstärkungsfüllstoff ausgewählt ist aus Ruß, Silika, Alumina, Aluminosilikaten, Calciumcarbonat, Kaolin oder Mischungen davon.

## Revendications

1. Pneumatique (100) comprenant :
- une structure de carcasse comprenant au moins une nappe de carcasse (101), de forme sensiblement toroïdale, dont les bords latéraux opposés sont respectivement associés à des structures de talon droit et de talon gauche (111);
- une structure de ceinture (105), placée en situation radialement externe par rapport à ladite structure de carcasse, laquelle structure de ceinture (105) comporte :
- une première couche de ceinture (105a), placée en situation radialement interne et munie d'éléments de renforcement parallèles les uns aux autres et inclinés par rapport au plan équatorial dudit pneumatique,
- une deuxième couche de ceinture (105b), placée radialement par-dessus ladite première couche de ceinture (105a) et munie d'éléments de renforcement parallèles les uns aux autres et inclinés par rapport au plan équatorial dudit pneumatique, mais dans une direction opposée par rapport à ceux de la première couche de ceinture,
- et au moins une couche de renfort (105d), placée radialement par-dessus ladite deuxième couche de ceinture (105b), dans laquelle couche de renfort sont incorporés des éléments de renforcement orientés dans une direction sensiblement circonférentielle ;
- une bande de roulement (106), placée radialement par-dessus ladite structure de ceinture ;
- deux flancs (103), lesquels flancs (103) sont placés latéralement chacun sur l'un des bords opposés de ladite structure de carcasse ;
- au moins deux inserts (104) faits d'un matériau élastomère réticulé, placés en situation radialement externe par rapport à ladite structure de ceinture (105) et à proximité des bords axialement externes de cette structure de ceinture (105), lesquels inserts comprennent chacun :
- une partie axialement interne (104a), interposée entre ladite structure de ceinture et ladite bande de roulement, qui s'amincit en direction du plan équatorial (x) dudit pneumatique (100),
- et une partie axialement externe (104b), interposée entre ladite structure de carcasse et le flanc correspondant (103), qui s'amincit en direction de l'axe de rotation dudit pneumatique ;
dans lequel ledit matériau élastomère réticulé présente un module élastique dynamique E', mesuré à 70 °C, inférieur à 7 MPa et a été obtenu par réticulation d'une composition élastomère réticulable comprenant :
a) au moins un élastomère polymère de diène,
b) au moins un adjuvant promoteur d'adhésion,
c) et du soufre ou des dérivés soufrés, en une proportion supérieure à 3,0 pcpe (parties pour cent parties d'élastomère).

2. Pneumatique conforme à la revendication 1, dans lequel ledit matériau élastomère réticulé présente un module élastique dynamique E', mesuré à 70 °C, de 2,5 à 6,0 MPa.

3. Pneumatique conforme à la revendication 2, dans lequel ledit matériau élastomère réticulé présente un module élastique dynamique E', mesuré à 70 °C, de 3,0 à 5,0 MPa.

4. Pneumatique conforme à la revendication 1, dans lequel ledit matériau élastomère réticulé présente un module élastique dynamique E', mesuré à 70 °C, qui est inférieur au module élastique dynamique E', mesuré à 70 °C, de la bande de roulement.

5. Pneumatique conforme à l'une des revendications précédentes, dans lequel ledit matériau élastomère réticulé présente un coefficient tg δ, mesuré à 70 °C, inférieur à 0,080.

6. Pneumatique conforme à la revendication 5, dans lequel ledit matériau élastomère réticulé présente un coefficient tg δ, mesuré à 70 °C, de 0,030 à 0,070.

7. Pneumatique conforme à la revendication 6, dans lequel ledit matériau élastomère réticulé présente un coefficient tg δ, mesuré à 70°C, de 0,040 à 0,065.

8. Pneumatique conforme à l'une des revendications précédentes, dans lequel ledit matériau élastomère réticulé présente une dureté IRHD, mesurée à 100 °C, supérieure à 45,0.

9. Pneumatique conforme à la revendication 8, dans lequel ledit matériau élastomère réticulé présente une dureté IRHD, mesurée à 100 °C, de 50,0 à 90,0.

10. Pneumatique conforme à la revendication 9, dans lequel ledit matériau élastomère réticulé présente une dureté IRHD, mesurée à 100 °C, de 55,0 à 75,0.

11. Pneumatique conforme à l'une des revendications précédentes, dans lequel les bords axialement externes de ladite première couche de ceinture (105a) sont décalés axialement vers l'intérieur par rapport aux bords axialement externes correspondants de ladite deuxième couche de ceinture (105b).

12. Pneumatique conforme à l'une des revendications 1 à 10, dans lequel les bords axialement externes de ladite première couche de ceinture (105a) sont décalés axialement vers l'extérieur par rapport aux bords axialement externes correspondants de ladite deuxième couche de ceinture (105b).

13. Pneumatique conforme à l'une des revendications précédentes, dans lequel ladite couche de renfort (105d) au nombre d'au moins une comprend une paire de bandes latérales de renfort, et le bord axialement externe de chacune de ces bandes est décalé axialement vers l'intérieur par rapport au bord axialement externe correspondant de ladite deuxième couche de ceinture (105b).

14. Pneumatique conforme à la revendication 13, dans lequel les deux bandes latérales de renfort de ladite paire sont disposées de manière à être sensiblement symétriques par rapport au plan équatorial (x) dudit pneumatique (100).

15. Pneumatique conforme à l'une des revendications 1 à 12, dans lequel ladite couche de renfort (105d) au nombre d'au moins une est une couche continue qui s'étend le long du développememt axial de ladite structure de ceinture (105).

16. Pneumatique conforme à l'une des revendications précédentes, dans lequel ladite structure de ceinture (105) comporte en outre une troisième couche de ceinture (105c), placée radialement par-dessus ladite couche de renfort (105d) au nombre d'au moins une et munie d'éléments de renforcement disposés parallèlement les uns aux autres et inclinés par rapport au plan équatorial (x) dudit pneumatique (100).

17. Pneumatique conforme à la revendication 16, dans lequel les bords axialement externes de ladite troisième couche de ceinture (105c) sont décalés axialement vers l'intérieur par rapport aux bords axialement externes correspondants de ladite couche de renfort (105d) au nombre d'au moins une.

18. Pneumatique conforme à la revendication 16 ou 17, dans lequel ladite troisième couche de ceinture (105c) recouvre au moins partiellement une paire de bandes latérales de renfort telles qu'indiquées dans la revendication 13 ou 14.

19. Pneumatique conforme à l'une des revendications précédentes, dans lequel lesdits inserts (104) au nombre d'au moins deux sont disposés de manière à être sensiblement symétriques par rapport au plan équatorial (x) dudit pneumatique (100).

20. Pneumatique conforme à l'une des revendications précédentes, dans lequel chacun desdits inserts (104) est placé entre l'ultime couche externe de la structure de ceinture (105) et la bande de roulement (106).

21. Pneumatique conforme à l'une des revendications précédentes, dans lequel l'épaisseur de chacun desdits inserts (104) vaut au moins 10 % de l'épaisseur de la bande de roulement (106).

22. Pneumatique conforme à la revendication 21, dans lequel l'épaisseur de chacun desdits inserts (104) vaut de 20 à 60 % de l'épaisseur de la bande de roulement (106).

23. Pneumatique conforme à l'une des revendications précédentes, dans lequel lesdits inserts (104) au nombre d'au moins deux, faits d'un matériau élastomère réticulé, se rejoignent de manière à former ensemble une couche continue de ce matériau élastomère réticulé, laquelle couche continue est interposée entre l'ultime couche externe de la structure de ceinture (105) et la bande de roulement (106).

24. Pneumatique conforme à la revendication 23, dans lequel ladite couche continue s'étend axialement entre les flancs (103).

25. Pneumatique conforme à l'une des revendications précédentes, pour lequel ladite composition élastomère réticulable comprenait du soufre ou des dérivés soufrés, en une proportion de 3,5 à 6,0 pcpe.

26. Pneumatique conforme à l'une des revendications précédentes, pour lequel ledit élastomère polymère de diène a été choisi parmi les polymères et copoymères élastomères réticulables à l'aide de soufre, comportant une chaîne insaturée et présentant une température de transition vitreuse inférieure à 20 °C.

27. Pneumatique conforme à la revendication 26, pour lequel ledit élastomère polymère de diène a été choisi parmi les suivants : cis-1,4-polyisoprène naturel ou synthétique, 3,4-polyisoprène, polybutadiène, copolymères d'isoprène et d'isobutène éventuellement halogénés, copolymères de 1,3-butadiène et d'acrylonitrile, copolymères de styrène et de 1,3-butadiène, copolymères de styrène, d'isoprène et de 1,3-butadiène, copolymères de styrène, de 1,3-butadiène et d'acrylonitrile, et combinaisons de tels polymères.

28. Pneumatique conforme à l'une des revendications précédentes, pour lequel ladite composition élastomère réticulable comprenait du caoutchouc naturel en une quantité représentant au moins 10 % du poids total dudit élastomère polymère de diène (a) au nombre d'au moins un.

29. Pneumatique pour roue de véhicule, conforme à la revendication 28, pour lequel ladite composition élastomère réticulable comprenait du caoutchouc naturel en une quantité représentant de 20 à 100 % du poids total dudit élastomère polymère de diène (a) au nombre d'au moins un.

30. Pneumatique conforme à l'une des revendications précédentes, pour lequel ladite composition élastomère réticulable comprenait au moins un élastomère polymère d'une ou plusieurs monooléfine(s), d'un comonomère oléfiique et d'au moins un diène, ou un dérivé d'un tel polymère.

31. Pneumatique conforme à la revendication 30, pour lequel ledit polymère élastomère a été choisi parmi les suivants : copolymères d'éthylène et de propylène (EPR), copolymères d'éthylène, de propylène et de diène (EPDM), polyisobutène, caoutchoucs butyl, caoutchoucs butyl halogénés, et mélanges de tels polymères.

32. Pneumatique conforme à l'une des revendications précédentes, pour lequel ledit adjuvant promoteur d'adhésion (b) a été choisi parmi les suivants :
- sels de cobalt divalent, choisis parmi les carboxylates de formule (R-CO-O)₂Co où R représente un groupe aliphatique en C₆₋₂₄ ou aromatique, tel le néodécanoate de cobalt ;
- complexes organométalliques à base de bore et de cobalt, au sein desquels ce dernier est lié par l'intermédiaire d'oxygène ;
- système à base de résorcinol et d'hexakis(méthoxyméthyl)mélamine (HMMM) ou système à base de résorcinol et d'hexaméthylènetétramine (HMT) ;
ou parmi leurs mélanges.

33. Pneumatique conforme à la revendication 32, pour lequel ledit adjuvant promoteur d'adhésion (b) était un mélange d'un complexe organométallique à base de bore et de cobalt et d'un système à base de résorcinol et d'hexakis(méthoxyméthyl)mélamine (HMMM).

34. Pneumatique conforme à la revendication 32 ou 33, pour lequel ledit adjuvant promoteur d'adhésion (b) se trouvait présent dans ladite composition élastomère réticulable en une proportion de 0,2 à 3 pcpe.

35. Pneumatique conforme à la revendication 34, pour lequel ledit adjuvant promoteur d'adhésion (b) se trouvait présent dans ladite composition élastomère réticulable en une proportion de 0,5 à 2,5 pcpe.

36. Pneumatique conforme à l'une des revendications précédentes, pour lequel ledit soufre ou dérivé soufré (c) a été choisi parmi les suivants :
- soufre soluble (soufre cristallisé) ;
- soufre insoluble (soufre polymère) ;
- soufre en dispersion dans une huile ;
- donneurs de soufre, tels les disulfure de tétraméthylthiurame (TMTD), disulfure de tétrabenzylthiurame (TBzTD), disulfure de tétraéthylthiurame (TETD), disulfure de tétrabutylthiurame (TBTD), disulfure de diméthyl-diphénylthiurame (MPTD), tétrasulfure ou hexasulfure de pentaméthylènethiurame (DPTT), disulfure de morpholino-benzothiazole (MBSS), N-oxydiéthylène-dithiocarbamyl-N'-oxy-diéthylènesulfénamide (OTOS), dithio-dimorpholine (DTM ou DTDM), et disulfure de caprolactame (CLD) ;
ou parmi leurs mélanges.

37. Pneumatique conforme à l'une des revendications précédentes, pour lequel ladite composition élastomère réticulable comprenait au moins une charge renforçante, en une proportion de 10 à 120 pcpe.

38. Pneumatique conforme à la revendication 37, pour lequel ladite charge renforçante au nombre d'au moins une a été choisie parmi les suivantes : noir de carbone, silice, alumine, aluminosilicates, carbonate de calcium et kaolin, ou parmi leurs mélanges.
